# EUROPEAN PATENT APPLICATION

(11) **EP 3 499 931 A1**
(43) Date of publication of application: **19.06.2019**
(21) Application number: 17002024.2
(22) Date of filing: 12.12.2017
(51) Int. Cl.: H04W 8/18

(54) **METHOD FOR MANAGING PROFILES OF A SMART CARD USED IN MOBILE DEVICES**

(71) Applicant: Giesecke+Devrient Mobile Security GmbH, 81677 München (DE)
(72) Inventor: Nitsch, Nils, 85570 Markt Schwaben (DE)

(57) **Abstract**

The invention relates to a method for managing profiles of a smart card (12) used in mobile devices (10). The method comprises the step of receiving, at an interface (IF2, IF3, IF4), a first command indicating that a pre-stored profile (13) shall be deleted from the smart card (12), the pre-stored profile (13) being a subscription profile (13) that has been stored on the smart card (12) before issuing the smart card (12) and that can be accessed via an access interface (IF2, IF3, IF4) by an access information. As a further step, modifying, with a processing unit, the access information such that an access of the pre-stored profile (13) via the access interface (IF2, IF3, IF4) is not possible any more, is carried out.

## Description

The invention relates to a method for managing profiles of a smart card used in mobile devices. The invention further relates to a smart card.

The universal integrated circuit card (UICC) is a smart card inserted into, e.g. a mobile communication terminal, and this is also called the UICC card. The UICC may include an access control module for accessing a mobile communication service provider's network. Examples of such access control modules include the universal subscriber identity module (USIM), the subscriber identity module (SIM), the internet protocol multimedia service identity module (ISIM), and the CDMA subscriber identity module (CSIM). The UICC including a USIM is typically referred to as a USIM card. Likewise, the UICC including a SIM is typically named a SIM card. As described hereinafter, the term "SIM card" may encompass, in its meaning, a UICC card, USIM card, or UICC having an ISIM. In other words, the technology for SIM cards may apply likewise to USIM cards, ISIM cards, or other common UICC cards. The UICC may be permanently (non-removable) installed in a mobile device. Such UICCs are referred to as eUICC or iUICC.

A SIM card stores personal information about a mobile communication service subscriber, and upon access to a mobile communication network, authenticates the subscriber, and generates a traffic security key, enabling safe use of mobile communication services.

SIM cards are manufactured as dedicated cards for particular mobile communication service provider at his request, and they are equipped with authentication information for access to the network of the service provider, such as a USIM application and international mobile subscriber identity (IMSI), before they are shipped out. The SIM cards so manufactured are delivered to the mobile communication service provider and then distributed to subscribers. Applications may be managed, e.g., installed, modified, or deleted in the UICC by utilizing, e.g., over the air (OTA) technique, as required to be done so later. A subscriber may receive network and application services of the provider through his terminal with the UICC card inserted. Also, upon attempting to use a new terminal, the subscriber may avail himself to the authentication information, phone number and context stored in the UICC card through the new terminal by simply putting the UICC card in the new device.

It is possible to store a subscription profile on the UICC card before issuing it to the mobile communication service provider and their customers. Storing the subscription profile on the UICC card before issuing it is done by the UICC manufacturer (EUM). A subscription profile that has been stored on the UICC before issuing it to the mobile communication service provider will be referred to as a pre-stored profile hereinafter.

According to the technical specification SGP.22, a pre-stored profile may be deleted after the UICC card has been shipped out. Deleting a pre-stored profile requires, according to the technical specification SGP.22, a physical deletion of all data of the pre-stored profile. As a disadvantage, after having deleted a pre-stored profile, its data cannot be restored any more since all data of the profile has been deleted from the memory of the UICC card. This is even true, if SGP.22-function "ES10c.eUICCMemoryReset" is carried out which provides the possibility of a return to a factory setting.

An object of the present invention is to provide a method for managing profiles of a smart card which enables a return to the factory setting in a way that the smart card is in a condition as it has been shipped out by the smart card manufacturer.

It is a further object of the present invention, to provide a smart card which can be shipped out with a pre-shipped stored profile and which can be reset to a factory setting without any limitations.

These objects are solved by a method according to the features of claim 1, a computer program product according to the features of claim 10 and a smart card according to the features of claim 11. Preferred embodiments are set out in the dependent claims.

The invention relates to a method for managing profiles of a smart card used in mobile devices. The smart card may be a SIM card as set out above. In particular, the smart card may be an embedded SIM (eSIM) card. The method comprises the step of receiving, at an interface, a first command indicating that a pre-stored profile shall be deleted from the smart card, the pre-stored profile being a subscription profile that has been stored on the smart card before issuing the smart card and that can be accessed via an access interface by an access information. Furthermore, the method comprises the step of modifying, with a processing unit, the access information such that an access of the pre-stored profile via the access interface is not possible any more.

According to this method, upon receiving a first command indicating that a pre-stored profile shall be deleted from the smart card, it is not physically deleted from the memory of the smart card. However, by modifying the access information which is needed to access the pre-stored profile a further or future access to the pre-stored profile is not possible any more regardless which of a plurality of interfaces is used to try to access the pre-stored profile. Hence, in case that a restoring of the pre-stored profile is desired, all the information of the pre-stored profile is still stored in the memory of the smart card and can therefore be recovered.

The interface may be an interface of the smart card. According to this embodiment, the processing unit may be part of the smart card as well. Alternatively, the interface may be an interface of the mobile device. According to this embodiment, the processing unit may be part of the mobile device. The processing unit may process the first command for modifying the access information. In case that the smart card comprises the processing unit, the mobile device may forward the first command (processed or unprocessed) to the smart card for further processing.

According to a preferred embodiment, upon modifying the access information, a pre-stored profile remains stored on the smart card. As set out above, remaining the pre-stored profile in a memory of the smart card enables a later restoring, e.g. when returning to a factory setting.

According to a preferred embodiment, upon having processed the first command, the pre-stored profile is no longer available for selection through the mobile device or any other requesting entity.

According to a further preferred embodiment, the step of modifying the access information comprises removing the pre-stored profile from a profile registry. Since information about the pre-stored profile is removed from the profile registry selection through the mobile device is made impossible.

According to a further preferred embodiment, the step of modifying the access information comprises assigning an attribute marking the pre-stored profile as deleted. When trying to access the pre-stored profile (and, of course any profile stored on the smart card) the attribute is retrieved. In case that the attribute corresponds to an information marking a profile as deleted, selection through the mobile device is made impossible. Hence, access to such a pre-stored profile is made impossible.

According to a further preferred embodiment, the first command corresponds to the function "ES10c.DeleteProfile" of the technical specification SGP.22. In contrast to the function "ES10c.DeleteProfile" of the technical standard SGP.22 which deletes the data of the profile from the memory of the smart card, executing this function, according to the invention, merely modifies the access information such that an access of the pre-stored profile is not possible any more. However, no deletion of the profile is made.

According to a further preferred embodiment, upon receiving a second command, restoring the modified access information to a state as before processing the modifying step is carried out. The second command may correspond to the function "ES10c.eUICCMemoryReset" of the technical standard SGP.22. The step of restoring the modified access information comprises restoring the pre-stored profile in the profile registry or removing of the attribute marking the pre-stored profile as deleted in addition to the procedures described in SGP.22 for this command.

Summarizing, independent from the history of profile within a smart card in a mobile device, it is possible to provide a real, initial factory setting of the smart card.

The invention further relates to a computer program product directly loadable into an internal memory of a processing unit comprising software code portions for performing the steps according to the methods as described herein when said product is run on the processing unit. The computer program product may be in a form of a USB memory stick, a CD-ROM, a DVD or a signal which is wired or wireless transmittable.

The invention further relates to a smart card which is adapted to manage a plurality of profiles stored on the smart card, comprising an interface adapted to receive a first command indicating that a pre-stored profile shall be deleted from the smart card, the pre-stored profile being a subscription profile that has been stored on the smart card before issuing the smart card and that can be accessed via an access interface by an access information, and a processing unit adapted to modify the access information such that an access of the pre-stored profile via the access interface is not possible any more.

Further embodiments, features, and advantages of the present invention will become apparent from the subsequent description, taken in conjunction with the accompanying drawings of which show:
Fig. 1 a schematic description of an exemplary mobile device according to the invention;
Fig. 2 a schematic flow chart describing a first aspect of managing profiles of a smart card used in mobile devices; and
Fig. 3 a schematic flow chart describing a second aspect of managing profiles of a smart card used in mobile devices.

In the example described below, it is referred to a smart card. The smart card may be a "SIM card" which may be, as described in the introductory part, a UICC card or a USIM card. In particular, the smart card may be an embedded UICC (eUICC) or an embedded SIM (eSIM).

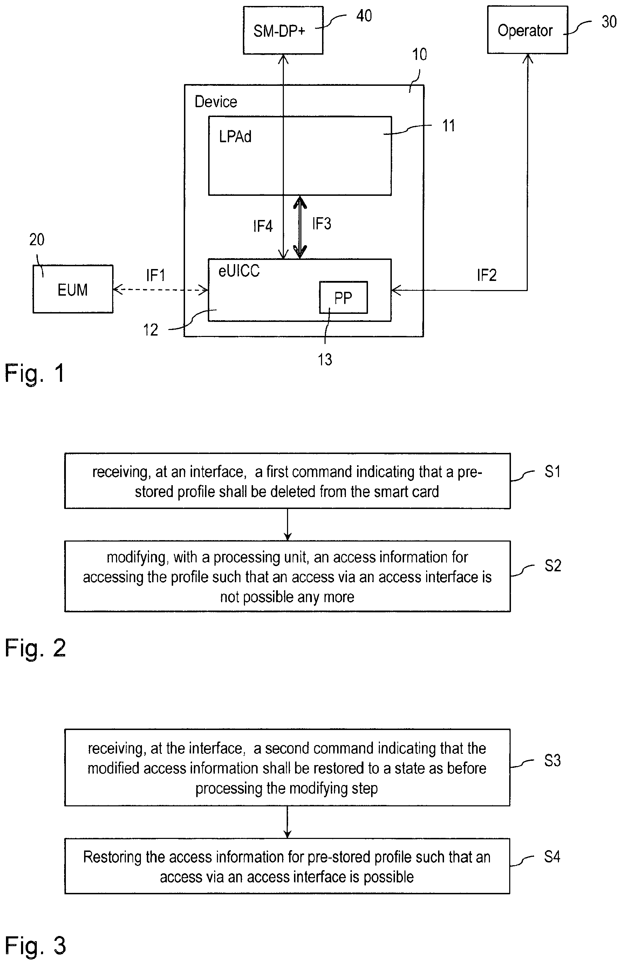

In Fig. 1, a mobile device 10 is illustrated. The mobile device 10 may be a mobile terminal, such as a mobile phone, a smartphone, a mobile computer (tablet PC, laptop) and so on. Moreover, the mobile device 10 may be an IoT (Internet of Things)-device. The mobile device 10 comprises a local profile assistant 11 (LPAd) and a smart card 12 (eUICC). The local profile assistant 11 is a functional element in the device 10 or in the smart card 12 that provides LPD (Local Profile Download), LDS (Local Discovery Service) and LUI (Local User Interface) features. The local profile assistant 11 may be located on the mobile device (as shown in Fig. 1) or on the smart card (not shown in the figures).

The smart card 12 comprises a memory (not explicitly shown) on which a subscription profile 13 (PP) is stored. The subscription profile 13 has been stored on the smart card 12 before issuing the smart card 12 by a manufacturer 20 of the smart card which is known as "eUICC Manufacturer" (EUM). Since the subscription profile 13 has been stored on the smart card 12 before issuing the smart card 12 it is called a pre-stored profile 13 hereinafter. Storing the pre-stored profile 13 on the smart card 12 is made via a production interface IF1 which will not be used any more for accessing the pre-stored profile 13 from the device.

An access to the pre-stored profile 13 is possible via a couple of interfaces IF2, IF3 and IF4. The interface IF2 is an interface between a network operator 30 (Operator) and the smart card 12. According to technical standard SGP.22 this interface is named ES6x. The interface IF3 which can consist of a plurality of interfaces is an interface between the local profile assistant 11 and the smart card 12. According to technical standard SGP.22 these interfaces are named ES10x. A third interface IF4 to access the smart card 12 is provided between a subscription manager called "subscription manager data preparation+" 40 (SM-DP+). This role prepares profile packages, secures them with a profile protection key, stores profile protection keys in a secure manner and the protected profile packages in a profile package repository, and allocates the protected profile packages to a specified eUICC-ID (EID). The subscription manager 40 (SM-DP+) binds protected profile packages to the respective EID and securely downloads these bound profile packages to the local profile assistant 11 of the respective smart card 12. According to technical standard SGP.22 this interface is named ES8+.

The preceding description is well known to the skilled person since it refers to the technical specification SGP.22.

In case that the smart card 12 receives a first command via the interface IF3 corresponding to the function ES10c.DeleteProfile according to technical specification SGP.22 which indicates that the pre-stored profile 13 shall be deleted from the smart card 12 (step S1 in Fig. 2) the pre-stored profile 13 will not be physically deleted from the memory of the smart card 12. Instead, according to step S2 of Fig. 2, an access information for accessing the profile via one of the interfaces IF2, IF3 or IF4 is modified such that an access is not possible anymore. Modifying the access information may consist of removing the pre-stored profile 13 from a profile registry (not shown) of the local profile assistant 11. Alternatively, or additionally an attribute marking the pre-stored profile 13 as "deleted" may be set. As a result of modifying the access information, an access to the pre-stored profile 13 in the memory of the smart card 12 is no longer possible. Hence, the pre-stored profile is no longer available (i.e. visible) for selection through the mobile device 10. In other words, modifying the access information disables an access of the pre-stored profile via one of the mentioned interfaces IF2, IF3 or IF4.

Upon receiving a second command, corresponding to the function ES10c.eUICCMemoryReset of technical specification SGP.22 via the interface IF3 (step S3 in Fig. 3), in step S4 of Fig. 3, restoring the modified access information is carried out such that the access information corresponds to the access information as before processing the modifying step in step S1. More detailed, restoring the modified access information comprises restoring the pre-stored profile in the profile registry as it was before receiving the first command. In case that, in step S2, an attribute marking the pre-stored profile as "deleted" has been set, this attribute will be removed or altered to indicate that the profile is active and selectable from now on again.

As a result, by means of the method described a return to a factory setting is possible.

### Reference Signs List

- 10: device
- 11: local profile assistant (LPA)
- 12: smart card (eUICC)
- 13: profile (PP)
- 20: manufacturer (EUM)
- 30: network operator (Operator)
- 40: (SM-DP+)
- 50: (SM-DS)
- IF1: production interface
- IF2: interface between network operator and smart card (ES6)
- IF3: interface(s) between local profile assistant and smart card (ES10)
- IF4: interface between SM-DP+ and smart card (ES8+)
- IF5: interface between SM-DS and local profile assistant (ES 11)
- S1,...,S4: method step

## Claims

1. A method for managing profiles of a smart card (12) used in mobile devices (10), comprising the steps of:
- receiving, at an interface (IF2, IF3, IF4), a first command indicating that a pre-stored profile (13) shall be deleted from the smart card (12), the pre-stored profile (13) being a subscription profile (13) that has been stored on the smart card (12) before issuing the smart card (12) and that can be accessed via an access interface (IF2, IF3, IF4) by an access information;
- modifying, with a processing unit, the access information such that an access of the pre-stored profile (13) via the access interface (IF2, IF3, IF4) is not possible any more.

2. The method according to claim 1, wherein, upon modifying the access information, the pre-stored profile (13) remains stored on the smart card (12).

3. The method according to claim 1 or 2, wherein, upon having processed the first command, the pre-stored profile (13) is no longer available for selection through the mobile device (10).

4. The method according to one of the preceding claims, wherein the step of modifying the access information comprises removing the pre-stored profile (13) from a profile registry.

5. The method according to one of the preceding claims, wherein the step of modifying the access information comprises assigning an attribute marking the pre-stored profile (13) as deleted.

6. The method according to one of the preceding claims, wherein the first command corresponds to the function ES10c.DeleteProfile of the technical specification SGP.22.

7. The method according to one of the preceding claims, wherein, upon receiving a second command, restoring the modified access information to a state as before processing the modifying step.

8. The method according to claim 7, wherein the step of restoring the modified access information comprises restoring the pre-stored profile (13) in the profile registry.

9. The method according to claim 7, wherein the step of restoring the modified access information comprises removing of the attribute marking the pre-stored profile (13) as deleted.

10. Computer program product directly loadable into an internal memory of a processing unit comprising software code portions for performing the steps according to one of the preceding claims when said product is run on the processing unit.

11. A smart card (12) which is adapted to manage a plurality of profiles (13) stored on the smart card (12), comprising:
- an interface (IF2, IF3, IF4) adapted to receive a first command indicating that a pre-stored profile (13) shall be deleted from the smart card (12), the pre-stored profile (13) being a subscription profile (13) that has been stored on the smart card (12) before issuing the smart card (12) and that can be accessed via an access interface (IF2, IF3, IF4) of the mobile device (10) by an access information; and
- a processing unit adapted to modify the access information such that an access of the pre-stored profile (13) via the access interface (IF2, IF3, IF4) is not possible any more.
